# EUROPEAN PATENT SPECIFICATION

(11) **EP 3 754 080 B1**
(45) Date of publication and mention of the grant of the patent: **08.03.2023**
(21) Application number: 20179087.0
(22) Date of filing: 09.06.2020
(51) Int. Cl.: D04B 37/02, G06F 30/10, G06F 30/12

(54) **KNIT DESIGNING SYSTEM FOR CREATING A CONTOUR LINE**
STRICKENTWURFSYSTEM ZUR ERZEUGUNG EINER KONTURLINIE
SYSTÈME DE CONCEPTION DE TRICOT POUR CRÉER UNE LIGNE DE CONTOUR

(30) Priority: 12.06.2019 JP 2019109258
(43) Date of publication of application: 23.12.2020
(73) Proprietor: SHIMA SEIKI MFG., LTD., Wakayama 641-8511 (JP)
(72) Inventor: WAKIMURA, Nami, Wakayama, 641-8511 (JP); MATSUBARA, Yoshiyuki, Wakayama, 641-8511 (JP)
(74) Representative: Emde, Eric

(56) References cited:
- EP-A1- 2 505 705

## Description

### Technical Field

The present invention relates to a knit designing system for designing a knitted fabric that is to be knitted by a flat knitting machine.

### Background Art

Conventionally, knit designing systems for designing a knitted fabric on a monitor have been proposed (see e.g., Patent Literature 1). Such a knit designing system creates design data containing information on stitches constituting a knitted fabric. The design data defines what stitch is to be knitted in each portion of the knitted fabric in what order. Accordingly, the design data contains information regarding the contour of the knitted fabric, information regarding the pattern of the knitted fabric, and the like. Based on the design data, the knit designing system creates a program for causing a flat knitting machine to perform knitting.

In the knit designing system, the design data is visualized as a design sheet on a monitor. The design sheet includes a plurality of cells (knitting units) that are arranged in a grid, and a knitting code is assigned to each of the knitting units. The transverse direction of the design sheet is a course direction, and the longitudinal direction thereof is a wale direction. The contour of the knitted fabric can be confirmed on the design sheet.

The design data may be created by the user from the beginning, or the knit designing system may assist the user in creating the design data. Examples of the latter case include using a first creation unit and a first memory that are included in the knit designing system. Based on paper-pattern data indicating the contour of a knitted fabric, the first creation unit creates original data, which is a kind of design data. The paper-pattern data is data containing information regarding the dimensions of the knitted fabric, i.e., information regarding the contour of the knitted fabric. The original data is design data created from the above-described paper-pattern data, and includes a contour line substantially corresponding to the contour of the paper-pattern data. On the other hand, the first memory stores the original data created by the first creation unit. For example, by adjusting the contour of the original data or interchanging the knitting codes, the user completes the design data for causing the flat knitting machine to perform knitting.

### Citation List

### Patent Literature

Patent Literature 1: WO 2002/033598A

In the knit design method known from EP 2 505 705 A1 first pattern data based on the finished size of each part of a knitted fabric is generated, and the first pattern data is converted to second pattern data representing the size in proportion to the number of stitches. Raster data representing the part in stitches is generated by converting the second pattern data to data expressed in the number of stitches of the part and forming a shaping line at a side end of the part.

### Summary of Invention

### Technical Problem

The knit designing systems are required to create design data that includes a contour line corresponding to the contour line imagined by the designer and that is suitable for knitting performed by a flat knitting machine. Since the first creation unit creates the original data so as to faithfully reproduce the contour line of the paper-pattern data, knitting efficiency has not been considered for the contour line of the original data. The contour line of such original data is difficult to be efficiently knitted by a flat knitting machine. Accordingly, the user makes adjustments to the contour line, thus forming a contour line that corresponds to the contour line imagined by the designer and that is easy to be knitted. However, if there are a plurality of sizes of design data, it is troublesome to make adjustments to each size of design data.

Some knit designing systems automatically correct the contour line so as to have a shape that can be easily knitted. However, an automatically corrected contour line may be significantly different from the contour line imagined by the designer. In that case, the user makes adjustments to the design data. In this case as well, if there are a plurality of sizes of design data, it is troublesome to make adjustments to each size of design data.

The present invention has been made in view of the above-described circumstances, and it is an object of the invention to provide a design system capable of easily creating design data that includes a contour line corresponding to the contour line imagined by the designer and that is suitable for knitting performed by a flat knitting machine.

### Solution to Problem

This and other objects are solved by a knit design system having the features as set forth in claim 1. Preferred embodiments of the knit design system are stated in the claims 2 to 4.

Thus, a knit designing system according to an aspect of the present invention is a knit designing system for designing a knitted fabric to be knitted by a flat knitting machine, based on design data containing knitting codes being information on stitches constituting the knitted fabric, the knit designing system including:
an input unit for a user to edit design data;
a display unit for displaying the design data as a design sheet on which cells are arranged in a grid into a wale and a course direction, a knitting code being assigned to each cell;
a first creation unit that creates, based on paper-pattern data indicating a contour of the knitted fabric, original data being the design data of the knitted fabric including a contour line corresponding to a contour line of the paper-pattern data, the created contour line being formed by connecting straight lines extending in the wale direction to straight lines extending in the course direction ; and
a first memory that stores the original data,
wherein the knit designing system includes:
   a second memory that stores a line module including information regarding a plurality of minute lines for constituting a revised contour line suitable for knitting and
   an order of arrangement of the minute lines, wherein the minute line is one of a straight line extending in the wale direction, a straight line extending in the course direction, and a combination of a straight line extending in the wale direction and a straight line extending in the course direction;
   a second creation unit that creates, based on the line module, a plurality of candidate lines obtained by varying the number of each of the plurality of minute lines; and
   a specifying unit that compares the contour line of the original data with each of the plurality of candidate lines, and specifies one of the plurality of candidate lines that is most approximate to the contour line of the original data as an approximation line.

The above-described minute line is a minimum constituent element that determines the shape of a contour line. On a design sheet on which the knitting units are arranged in a grid, the contour line is formed by connecting straight lines extending in the wale direction to straight lines extending in the course direction. Accordingly, the contour line includes a plurality of minute steps having different shapes. Therefore, a minute line is one of (1) a straight line extending in the wale direction, (2) a straight line extending in the course direction, and (3) a combination of a straight line extending in the wale direction and a straight line extending in the course direction that constitute a step.

As an embodiment, the knit designing system according to the present invention includes:
a third memory that stores correction data obtained as a result of a user correcting the contour line of the original data; and
a third creation unit that creates the line module from a contour line of the correction data.

As an embodiment of the knit designing system according to the present invention,
the specifying unit determines an area enclosed by the contour line of the original data and each of the plurality of candidate lines, and specifies, as the approximation line, one of the plurality of candidate lines for which the area is minimum.

As an embodiment of the knit designing system according to the present invention,
the specifying unit specifies, as the approximation line, one of the plurality of candidate lines that is most approximate to the contour line of the original data using dynamic time warping.

### Effects of the Invention

With the knit designing system according to the present invention, it is possible to easily create design data that includes a contour line corresponding to the contour line imagined by the designer and that is suitable for knitting performed by a flat knitting machine. The reason is that the knit designing system according to the present invention creates candidate lines for a plurality of contour lines using a line module including information for correcting original data into a shape suitable for knitting, and specifies a candidate line (approximation line) that is most approximate to the original data.

With the knit designing system according to an embodiment of the present invention that creates a line module from correction data created by the user, it is possible to easily correct design data of a plurality of sizes. For example, if the user corrects S-size design data, a line module corresponding to the corrected data can be obtained. With that line module, the knit designing system can correct the contour line of design data of another size (e.g., L-size) into a contour line in accordance with the correction pattern of the S-size design data. Accordingly, the user's time and effort can be reduced.

With the knit designing system according to an embodiment of the present invention that determines an approximation line based on areas, it is possible to specify the approximation line at high speed. The reason is that the approximation line can be specified simply by counting the number of knitting units of the design sheet that are enclosed by the contour line of the original data and the candidate line, and therefore the computational load for specifying the approximation line is small.

With the knit designing system according to an embodiment of the present invention that determines the approximation line that is most approximate to the contour line of the original data using dynamic time warping (DTW), a candidate line (approximation line) that is extremely close to the contour line of the original data can be easily specified.

### Brief Description of Drawings

FIG. 1 is a functional block diagram of a knit designing system according to Embodiment 1.
FIG. 2 is an explanatory diagram showing a procedure for creating original data from paper-pattern data.
FIG. 3 is an explanatory diagram showing a portion of correction data obtained from original data.
FIG. 4 is an explanatory diagram showing a procedure for creating a line module from a contour line of correction data.
FIG. 5 is an explanatory diagram showing a display example of a line module.
FIG. 6 is an explanatory diagram showing an example of a candidate line.
FIGS. 7A and 7B are explanatory diagrams showing a first method for specifying an approximation line.
FIG. 8 is an explanatory diagram showing a second method for specifying an approximation line.

### Description of Embodiments

Hereinafter, an example of an embodiment of a knit designing system according to the present invention will be described with reference to the drawings.

### Embodiment 1

### Overall Configuration

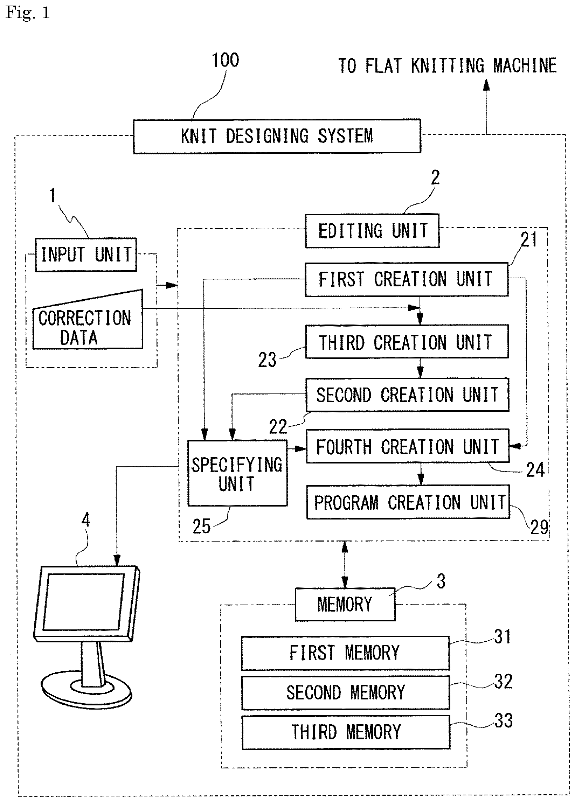

A knit designing system 100 shown in the functional block diagram in FIG. 1 includes an input unit 1, an editing unit 2, a memory 3, and a display unit 4. The knit designing system 100 is for creating a program for the user to design a knitted fabric on the display unit 4 and to cause a flat knitting machine to knit the designed knitted fabric. The knit designing system 100 can be used to design a knitted fabric in all flat knitting machines such as a two-bed flat knitting machine and a four-bed flat knitting machine. One of the characteristics of the knit designing system 100 is that it is configured to obtain design data that includes a contour line corresponding to the contour line imagined by the designer using data that is herein referred to as a line module. In the following, components of the knit designing system 100 will be described in detail.

### Input Unit

The input unit 1 is used when the user edits design data, and is configured in a form such as a keyboard, a mouse, a scanner, or a digitizer. The input unit 1 in the present example is used, for example, to capture a paper pattern into the knit designing system 100 as digital data (paper-pattern data), and input a knitting code into a design sheet displayed on the display unit 4 such as a monitor.

The above-described paper-pattern data may be either a raster image or a vector image. A raster image is image data constituted by an assembly of pixels. A vector image is image data reproduced through computation, based on numerical data such as coordinates of points and a line (vector) connecting the points.

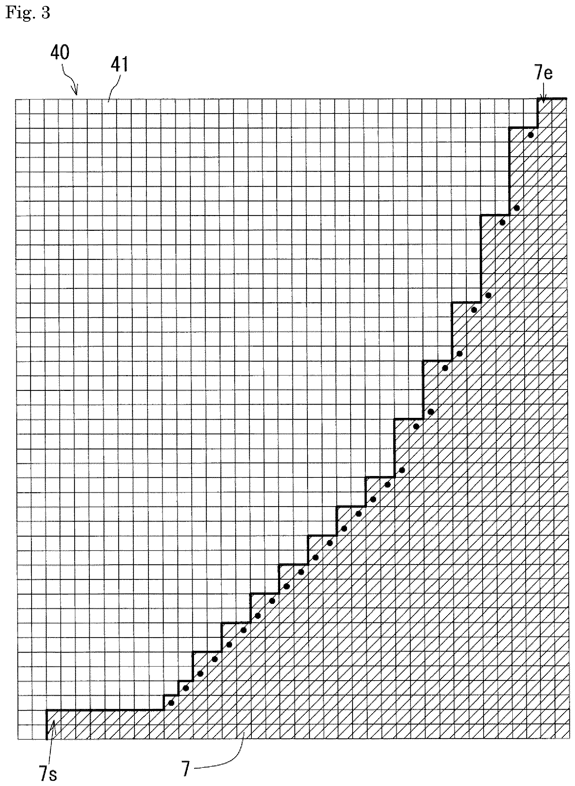

As shown in FIG. 3, a design sheet 40 has a configuration in which cells 41 that are in one-to-one correspondence with stitches are arranged in a grid. The cells 41 are a plurality of knitting units corresponding to the respective needles of the needle bed of the flat knitting machine, and are each assigned with one knitting code. The transverse direction of the design sheet 40 corresponds to a knitting course. The transverse direction may be considered as being corresponding to the length direction of the needle bed (direction in which a plurality of needles are arranged in parallel). On the other hand, the longitudinal direction of the design sheet 40 corresponds to the wale direction of the knitted fabric. The longitudinal direction may be considered as a time axis indicating an elapse of time during knitting.

The knitting codes (portions hatched at 45°) that are input to the respective knitting units 41 are icons represented to make it possible to visually distinguish between knitting operations performed by the flat knitting machine. For example, each knitting code can be represented by a color, a number, a figure, or a combination thereof. The knitting operation corresponding to each knitting code is determined in advance. For example, a knitting code represented in red is defined as a knitting code for causing the flat knitting machine to knit a front stitch, and a knitting code represented in green is a knitting code for causing the flat knitting machine to knit a back stitch. It is, of course, possible that one knitting code defines a plurality of knitting operations. Examples thereof include a knitting code for knitting a front stitch and moving the front stitch to the opposing needle bed. These knitting codes are stored in the memory 3, which will be described below.

The design sheet 40 displayed on the display unit 4 is obtained by visualizing design data. The design data is data containing information on stitches constituting a knitted fabric. In other words, the design data is data in which a procedure for executing the knitting codes is defined. More specifically, the design data contains information such as with which needle of the flat knitting machine knitting is to be performed, at what timing the knitting is to be performed, what kind of stitch is to be knitted in the knitting, and with which needle the knitting is not to be performed. That is, it can be said that the design data is similar to a design drawing of the knitted fabric, and contains information regarding the contour line of the knitted fabric.

### Display Unit

The display unit 4 is for visually understanding information regarding the design of the knitted fabric. Examples of the information displayed include the above-described design sheet. Examples of the display unit 4 include a liquid crystal display. Using a touch panel as the display unit 4 allows the display unit 4 to perform a part of the function of the input unit 1.

### Editing Unit

The editing unit 2 has the function of creating various types of data relating to the design of the knitted fabric, and can be configured by a computer, for example. The editing unit 2 includes a first creation unit 21, a second creation unit 22, a third creation unit 23, a fourth creation unit 24, a specifying unit 25, a program creation unit 29, and so forth. In the following, the components of the editing unit 2 will be described.

### First Creation Unit

The first creation unit 21 creates original data based on paper-pattern data indicating the contour of the knitted fabric. The original data is a kind of design data that includes a contour line corresponding to the contour line of the paper-pattern data. The original data is stored in the first memory 31.

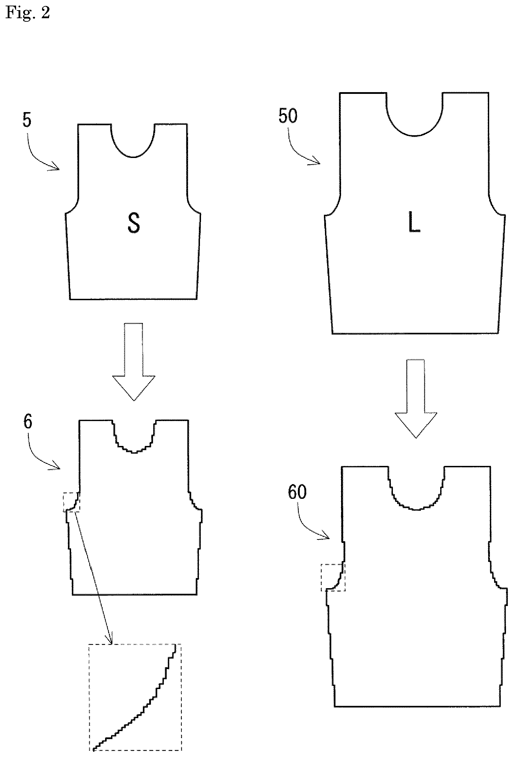

FIG. 2 is a drawing in which paper-pattern data 5 and 50 and original data 6 and 60 are visualized. The paper-pattern data 5 is data regarding the contour of an S-size knitted fabric, and the paper-pattern data 50 is data regarding the contour of an L-size knitted fabric. As shown in a portion below the paper-pattern data 5 (50), the contour line of the original data 6 (60) based on the paper-pattern data 5 (50) is created so as to be as faithful as possible to the contour line of the paper-pattern data 5 (50). Accordingly, as shown in an enlarged view of the contour line enclosed by the dotted square located below the original data 6, it is often the case that the contour line of the original data 6 (60) is irregular, and is not a contour line for which knitting efficiency has been taken into consideration. In practice, the original data 6 (60) is not used for knitting a knitted fabric without being corrected, and the user corrects the contour line of the original data 6 (60) using the input unit 1. Although the knit designing system 100 has the function of automatically correcting the original data 6 (60) based on a preset algorithm, the user may further finely adjust the corrected contour line. In the following description, an example will be described in which the user corrects S-size original data, and correction to L-size original data is made by the knit designing system 100.

FIG. 3 is a diagram in which a part of design data (correction data 7) obtained as a result of the user correcting the contour line of the original data 6 is visualized. FIG. 3 corresponds to the portion of the original data 6 that is enclosed by the broken line in FIG. 2. As shown in the drawing, in the correction data 7, the size of the shape of a step gradually increases toward the wale direction (upward on the sheet of paper), and no smaller step is disposed after a larger step. That is, the contour line is formed such that the angle of inclination thereof gradually increases. Accordingly, the contour line is smooth and has an excellent appearance. In addition, except for the two steps (each of which corresponds to one knitting unit) located at the start position of the inclination, the number of courses arranged in the wale direction in each of the steps is an even number. Return knitting is performed for the contour line, and knitting can be easily performed when the termination of forward knitting of return knitting and the start of backward knitting thereof are at the same position in the knitting width direction. Accordingly, the steps with an even number of courses can be easily knitted by a flat knitting machine, and it can therefore be said that a knitted fabric based on the correction data 7 can be efficiently knitted. The correction data 7 is stored in the third memory 33.

### Second Creation Unit

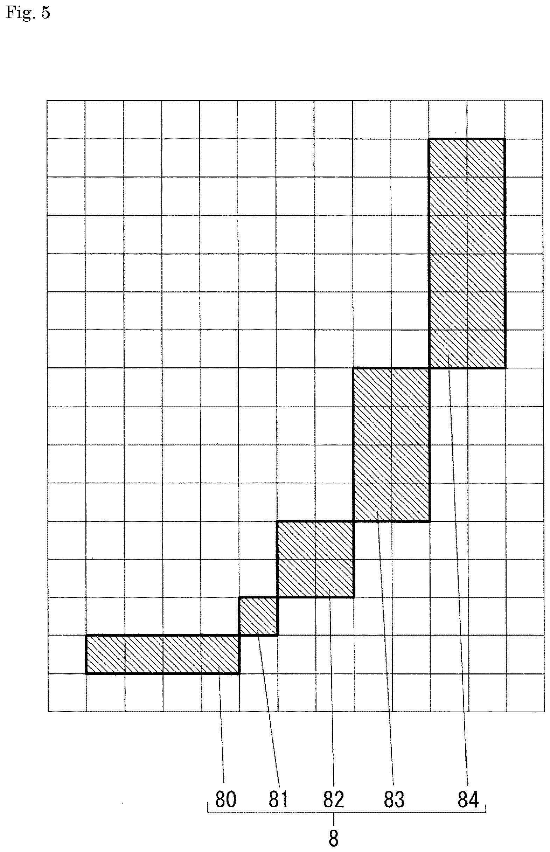

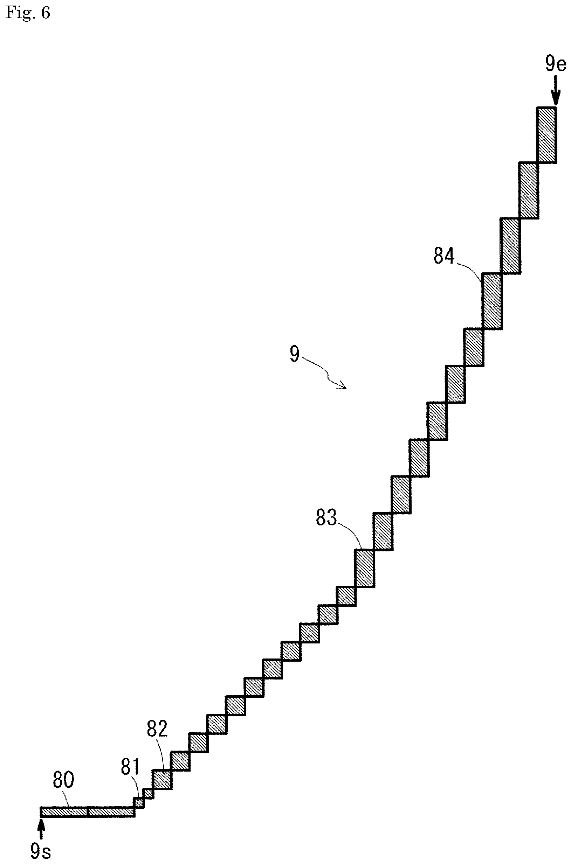

The second creation unit 22 creates a plurality of candidate lines 9 (FIG. 6) based on a line module 8 (FIG. 5). The line module 8 is information for correcting the contour line of the original data into a shape suitable for knitting, more specifically, information regarding a plurality of minute lines for constituting a contour line suitable for knitting and the order of arrangement of the minute lines. In the present example, a plurality of candidate lines 9 are created for a portion of the contour line of the L-size original data 60 shown in FIG. 2 that is enclosed by the dotted line. The portion of the L-size original data 60 that is enclosed by the dotted line corresponds to the portion of the S-size original data 6 that is enclosed by the dotted line. The line module 8 for creating candidate lines 9 for the L-size is created based on the S-size correction data 7 (FIG. 3) by the third creation unit 23. Accordingly, in the present example, the third creation unit 23, and the procedure for creating the line module 8 by the third creation unit 23 will be described prior to the description of the procedure for creating the candidate lines 9 by the second creation unit 22. The procedure for creating the candidate lines 9 will be described in detail in the section of the specifying unit 25, which will be discussed below.

### Third Creation Unit

The third creation unit 23 creates, based on the correction data 7 obtained as a result of the user correcting the contour line of the original data 6, a line module 8 including information on minute lines, which are constituent elements of that contour line. In the present example, line blocks 80 to 84 including minute lines are used as a concept of extracting minute lines. The line block 80 corresponds to a plurality of minute lines that are continuous in the course direction. Each of the line blocks 81 to 84 corresponds to one step. That is, the line blocks 81 to 84 each correspond to a minute line extending in the wale direction, and a minute line connected to the upper end of that minute line and extending in the course direction.

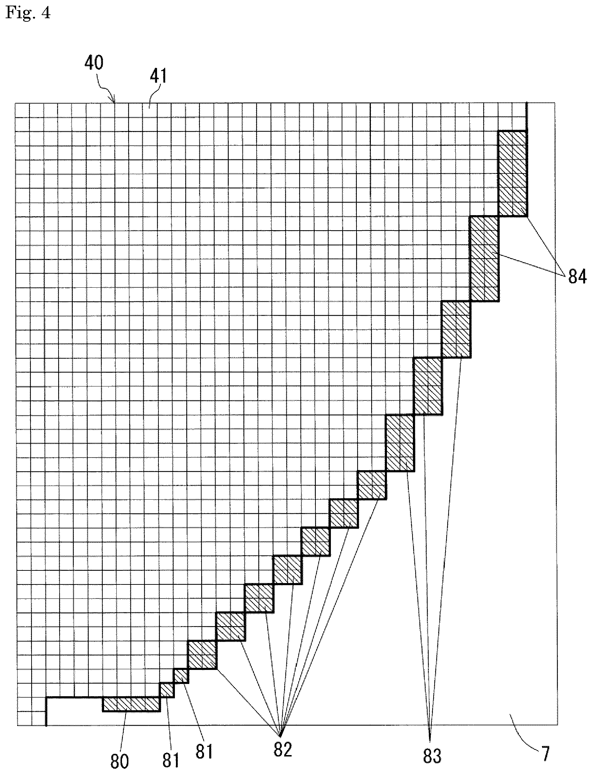

As shown in FIG. 4, the third creation unit 23 determines line blocks 80 to 84 that fit the contour line of the correction data 7. The line blocks 80 to 84 are specified according to, for example, the procedure shown below. First, the third creation unit 23 specifies cells 41 constituting the peripheral outline of the correction data 7 shown in FIG. 3. Then, out of the peripheral outline, the third creation unit 23 sets a start 7s and a termination 7e of the contour line, and specifies steps of the contour line. At that time, as indicated by black circles, the third creation unit 23 specifies a cell (the cell at the lower left of each step) serving as the formation starting position of each step, and a cell (the cell at the upper right of each step) serving as the end position of that step. Then, the third creation unit 23 fits the rectangular line blocks 81 to 84 including the formation starting positions of the steps and the end positions thereof (see FIG. 4). In addition, the third creation unit 23 fits the line block 80 to a horizontal portion in proximity to the lowermost step. The number of cells constituting the line block 80 can be set freely. For the correction data 7 shown in FIG. 4, one line block 80, two line blocks 81, seven line blocks 82, three line blocks 83, and two line blocks 84 are fitted.

The third creation unit 23 extracts, as a minimum constituent element that determines the shape of the contour line of the correction data 7, information on the line block 80 fitted to the horizontal portion of the contour line, and information on the line blocks 80 to 84 fitted to the steps. Further, the third creation unit 23 extracts information regarding the relative positions of the line blocks 80 to 84 in the knitting width direction and the wale direction, and information regarding the order of arrangement of the line blocks 80 to 84 in the wale direction, for example. Information regarding the numbers of the line blocks 81 to 84 is not essential. The third creation unit 23 that has extracted the above-described information creates the line module 8 shown in FIG. 5. The line module 8 is stored in the second memory 32.

FIG. 5 is a diagram in which the line module 8 is visualized. For the line module 8, only the types and the order of arrangement of the line blocks 80 to 84 constituting the line module 8 are visualized, and the respective numbers of the line blocks 80 to 84 are not visualized. Each cell in FIG. 5 correspond to one knitting unit. The line block 80 constituting the horizontal portion of the contour line is composed of four knitting units that are arranged in the knitting width direction. The number of knitting units constituting the line block 80 is not particularly limited, as long as the number is less than or equal to the number of knitting units constituting the horizontal portion of the correction data 7 shown in FIG. 3. The line block 81 is constituted by one knitting unit. On the other hand, the line blocks 82, 83, and 84 are each constituted by n × m knitting units. The "n" is the number (pitch number) of knitting units arranged in the knitting width direction, and is "2" in the present example. Of course, the "n" may be 1, or 3 or more. The "m" is the number (course number) of knitting units arranged in the wale direction, and is preferably an even number.

The line blocks 80 to 84 of the line module 8 in FIG. 5 are displaced in the transverse direction (knitting width direction) and the longitudinal direction (wale direction). This indicates the relative positional relationship between the line blocks 80 to 84 in the knitting width direction and the wale direction. For example, in the case of connecting the line block 82 to the line block 81 when a creating candidate line 9 (FIG. 6), which will be described below, the two line blocks 81 and 82 must be arranged such that the upper right corner of the line block 81 and the lower left corner of the line block 82 coincide with each other. In addition, the order of arrangement of the line blocks 80 to 84 in the wale direction must not be different from the order of arrangement shown in FIG. 5. For example, the line block 81 must not be disposed after the line block 82.

### Specifying Unit

The specifying unit 25 compares the contour line of the L-size original data 60 (FIG. 2) with each of the candidate lines 9 (FIG. 6) created by the second creation unit 22, and specifies a candidate line 9 that is most approximate to the contour line of the original data 60 as an approximation line. The specified approximation line is output to the fourth creation unit 24.

First, the procedure for creating candidate lines 9 that the specifying unit 25 compares the original data 60 with will be described with reference to FIG. 6. FIG. 6 is an example of the candidate lines 9. As previously described, the creation of the candidate lines 9 is performed by the second creation unit 22.

The second creation unit 22 creates a plurality of candidate lines 9 using the line module 8. Specifically, the second creation unit 22 specifies the position of a start 9s and the position of a termination 9e in the L-size original data 60. The second creation unit 22 creates a plurality of candidate lines 9 by varying the numbers of line blocks 80 to 84 connected between the start 9s and the termination 9e. Note, however, that the order of arrangement of the line blocks 80 to 84 on each candidate line 9 is the same as the order of arrangement (FIG. 5) of the line blocks 80 to 84 on the contour line of the correction data 7. The second creation unit 22 creates a candidate line 9 for all patterns in which the numbers of line blocks 80 to 84 are varied within a range that the line blocks 80 to 84 can be fitted between the start 9s and the termination 9e. On each candidate line 9, each of the line blocks 80 to 84 is used at least once.

The candidate line 9 in FIG. 6 is formed by connecting two line blocks 80, two line blocks 81, eleven line blocks 82, seven line blocks 83, and four line blocks 84. As shown in the drawing, except for the line blocks 80, in the case of arranging the same line blocks (e.g., the line blocks 81), the line blocks are arranged such that the lower left corner of the k+1th line block 81 is disposed at the upper right corner of the k-th line block 81 (k is a natural number).

Here, it is possible to limit the numbers of line blocks 80 to 84 that are connected. For example, it is possible to adopt a configuration in which the number of line blocks 81 that are connected is fixed to 2, and the numbers of the other line blocks 80 and 82 to 84 are not fixed.

Next, the method by which the specifying unit 25 specifies the approximation line will be described. In the present specification, as the method for specifying the approximation line, the following two different methods will be described.

### First Method

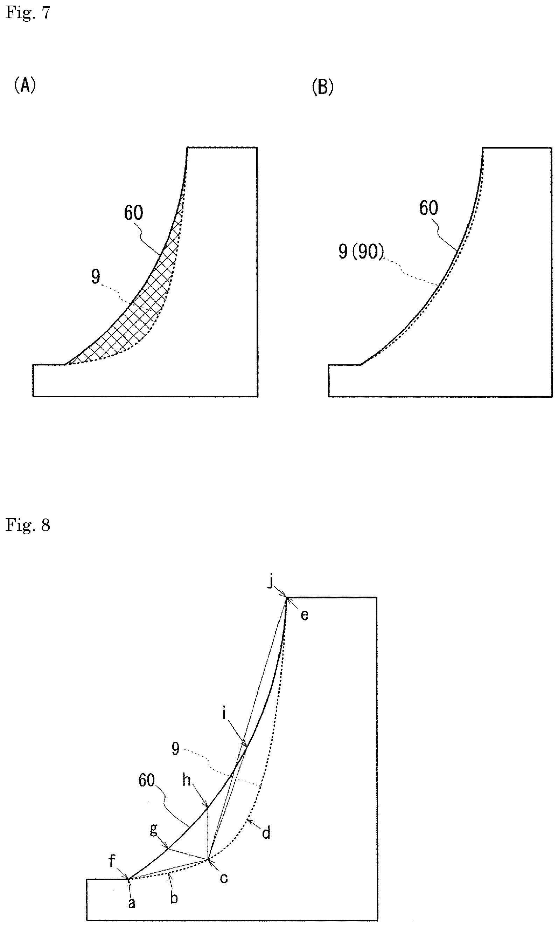

A first method for specifying the approximation line is a method in which the area enclosed by the contour line of the original data 60 and each of the candidate lines 9 is determined. The first method will be described with reference to FIGS. 7A and 7B. For the sake of convenience of description, the both lines are shown as smooth curves in FIGS. 7A and 7B.

The solid line in FIGS. 7A and 7B indicates the contour line of the original data 60, and the dotted line indicates the candidate line 9. The specifying unit 25 determines the area (cross-hatched portion) enclosed by the contour line of the original data 60 shown in each of FIGS. 7A and 7B and the candidate line 9. The area is determined by counting the number of knitting units enclosed by the contour line of the original data 60 and the candidate line 9. In the example shown in FIGS. 7A and 7B, the area of the cross-hatched portion in FIG. 7B is smaller than the area of the cross-hatched portion in FIG. 7A. The smaller the area, the more approximate the candidate line 9 to the contour line of the original data 60 is. As a result of determining the area for all of the candidate lines 9, if the above-described area is minimum for the candidate line 9 shown in FIG. 7B, the specifying unit 25 determines the candidate line 9 in FIG. 7B as an approximation line 90 that is most approximate to the contour line of the original data 60.

### Second Method

A second method for specifying the approximation line is a method in which dynamic time warping (DTW) is used. The second method will be described with reference to FIG. 8.

In FIG. 8, the contour line of the original data 60 and the candidate line 9 are shown as smooth curves. In DTW, the total sum of distances from points (a to e indicated by the arrows) on the candidate line 9 to points (f to j indicated by the arrows) on the contour line of the original data 60 is determined. For example, in FIG. 8, a plurality of straight lines that are drawn from the point c to the points f, g, h, i, and j are shown. The sum of the lengths of these straight lines is the total sum of the distances from the point c to the contour line of the original data 60. The distances from the other points on the candidate line 9 to the contour line of the original data 60 are also determined. The candidate line 9 for which the total sum of all of the distances is minimum is the candidate line 9 that is most approximate to the contour line of the original data 60. Therefore, the specifying unit 25 determines the candidate line 9 for which the above-described total sum is minimum as the approximation line.

The larger the number of points in DTW, the higher the specifying accuracy of the approximation line becomes, but the longer the specifying time of the approximation line becomes. The user may appropriately select the number of points, taking the balance between the specifying accuracy and the specifying time into consideration.

The specifying unit 25 displays the specified approximation line 90 on the display unit 4. If the user approves the use of the approximation line 90, the specifying unit 25 outputs the approximation line 90 to the fourth creation unit 24. If the user does not approve the use of the approximation line 90, the specifying unit 25 may display, on the display unit 4, the candidate lines 9 in ascending order of the area determined in the first method or the total sum of distances determined in the second method, and repeatedly prompt the user to select approval or disapproval of the use. Unlike the present example, the specifying unit 25 may display, on the display unit 4, a plurality of candidate lines 9 (including the approximation line 90) for which the area or the total sum of distance described above is small. The user can select, from among the plurality of candidate lines 9, the candidate line 9 that is most approximate to what the user has imagined, using the input unit 1. In addition, the specifying unit 25 may output the approximation line 90 to the fourth creation unit 24 without the user's approval. It is preferable that these settings are configured such that they can be changed as appropriate.

### Fourth Creation Unit

The fourth creation unit 24 corrects the L-size original data 60 (FIG. 2) so as to include a contour line that is the same as the approximation line 90 or the candidate line 9 selected by the user. As a result, the L-size correction data that includes a contour line corresponding to the contour line imagined by the designer and that is suitable for knitting performed by a flat knitting machine is created. Thus, with the knit designing system 100 of the present example, the user needs only to correct the S-size original data 6, and does not need to correct the L-size original data 60.

### Program Creation Unit

The program creation unit 29 creates a program for causing a flat knitting machine to perform knitting based on design data. In the program, actual needle operations, carriage movement, and the procedure for feeding a knitting yarn, for example, are defined. The program is sent to the flat knitting machine via a recording medium such a USB memory, a wired connection, or a wireless connection. The program can also be used to create a simulation image of a knitted fabric.

### Memory

The memory 3 includes a first memory 31 that stores original data, a second memory 32 that stores a line module, and a third memory 33 that stores correction data obtained as a result of the user correcting the contour line of the original data. In the present example, the memories 31 to 33 are each constituted by a partial region of the memory 3. Of course, the memory 3 can store other information relating to the design of a knitted fabric.

### Effect

With the knit designing system 100 of the present example, it is possible to easily create design data that includes a contour line corresponding to the contour line imagined by the designer and that is suitable for knitting performed by a flat knitting machine.

### Other Embodiments

Embodiment 1 has described an example in which the line module 8 used for creation of the candidate line 9 is created by the third creation unit 23. In contrast, the line module 8 may be created by the user. Alternatively, as the line module 8, a line module 8 that was created in the past may be read into the second memory 32.

In the line module 8 of Embodiment 1 shown in FIG. 5, the line blocks 80 to 84 are arranged so as to form a shape that is inclined upward to the right. Accordingly, the candidate line 9 (FIG. 6) created using the line module 8 forms a shape that is recessed downward to the right. Unlike the example shown in FIG. 5, in the line module 8, the line block 80, the line block 84, the line block 83, the line block 82, and the line block 81 may be arranged in this order from the bottom. In that case, the candidate line 9 forms a shape that bulges upward to the left. In addition, in the line module 8, the line blocks 80 to 84 may be arranged in an S-shape. In that case, the candidate line is also formed in an S-shape.

## Claims

1. A knit designing system (100) for designing a knitted fabric to be knitted by a flat knitting machine, based on design data containing knitting codes being information on stitches constituting the knitted fabric, the knit designing system (100) including:
an input unit (1) for a user to edit design data;
a display unit (4) for displaying the design data as a design sheet on which cells are arranged in a grid into a wale and a course direction, a knitting code being assigned to each cell;
a first creation unit (21) that creates, based on paper-pattern data (5) indicating a contour of the knitted fabric, original data (6, 60) being the design data of the knitted fabric including a contour line corresponding to a contour line of the paper-pattern data (5) , the created contour line being formed by connecting straight lines extending in the wale direction to straight lines extending in the course direction; and
a first memory (31) that stores the original data (6),
the knit designing system (100) **characterized by**:
a second memory (32) that stores a line module (8) including information regarding a plurality of minute lines for constituting a revised contour line suitable for knitting and an order of arrangement of the minute lines, wherein the minute line is one of a straight line extending in the wale direction, a straight line extending in the course direction, and a combination of a straight line extending in the wale direction and a straight line extending in the course direction;
a second creation unit (22) that creates, based on the line module (8), a plurality of candidate lines (9) obtained by varying the number of each of the plurality of minute lines; and
a specifying unit (25) that compares the contour line of the original data (60) with each of the plurality of candidate lines (9), and specifies one of the plurality of candidate lines (9) that is most approximate to the contour line of the original data (60) as an approximation line (90).

2. The knit designing system (100) according to claim 1, comprising:
a third memory (33) that stores correction data (7) obtained as a result of a user correcting the contour line of the original data (6); and
a third creation unit (23) that creates the line module (8) from a contour line of the correction data (7).

3. The knit designing system (100) according to claim 1 or 2,
wherein the specifying unit (25) determines an area enclosed by the contour line of the original data (60) and each of the plurality of candidate lines (9), and specifies, as the approximation line (90), one of the plurality of candidate lines (9) for which the area is minimum.

4. The knit designing system (100) according to claim 1 or 2,
wherein the specifying unit (25) specifies, as the approximation line (90), one of the plurality of candidate lines (9) that is most approximate to the contour line of the original data (60) using dynamic time warping.

## Patentansprüche

1. Strickentwurfssystem (100) für das Entwerfen eines durch eine Flachstrickmaschine zu strickenden Gestricks basierend auf Entwurfsdaten, die Strickcodes enthalten, die Informationen zu das Gestrick bildenden Maschen sind, wobei das Strickentwurfssystem (100) umfasst:
eine Eingabeeinheit (1) für einen Benutzer zum Bearbeiten von Entwurfsdaten,
eine Anzeigeeinheit (4) zum Anzeigen der Entwurfsdaten als ein Entwurfsblatt, auf dem Zellen in einem Raster in einer Maschenstäbchenrichtung und einer Reihenrichtung angeordnet sind, wobei jeder Zelle ein Strickcode zugewiesen ist,
eine erste Erstellungseinheit (21), die basierend auf Papiermusterdaten (5), die eine Kontur des Gestricks angeben, Originaldaten (6, 60) erstellt, die die Entwurfsdaten des Gestricks sind und eine Konturlinie in Entsprechung zu einer Konturlinie der Papiermusterdaten (5) enthalten, wobei die erstellte Konturlinie durch das Verbinden von sich in der Maschenstäbchenrichtung erstreckenden geraden Linien mit sich in der Reihenrichtung erstreckenden geraden Linien gebildet wird, und
einen ersten Speicher (31), der die Originaldaten (6) speichert,
wobei das Strickentwurfssystem (100) **gekennzeichnet ist durch**:
einen zweiten Speicher (32), der ein Linienmodul (8) speichert, das Informationen in Bezug auf eine Vielzahl von winzigen Linien für das Bilden einer für das Stricken geeigneten umgearbeiteten Konturlinie und eine Anordnungsreihenfolge der winzigen Linien enthält, wobei die winzige Linie eine sich in der Maschenstäbchenrichtung erstreckende gerade Linie, eine sich in der Reihenrichtung erstreckende gerade Linie oder eine Kombination aus einer sich in der Maschenstäbchenrichtung erstreckenden geraden Linie und einer sich in der Reihenrichtung erstreckenden geraden Linie ist,
eine zweite Erstellungseinheit (22), die, basierend auf dem Linienmodul (8), eine Vielzahl von Kandidatenlinien (9) erstellt, die **durch** das Variieren der Anzahl jeder aus der Vielzahl von winzigen Linien erhalten werden, und
eine Spezifikationseinheit (25), die die Konturlinie der Originaldaten (60) mit jeder aus der Vielzahl von Kandidatenlinien (9) vergleicht und eine aus der Vielzahl von Kandidatenlinien (9), die der Konturlinie der Originaldaten (60) am nächsten ist, als eine Annäherungslinie (90) spezifiziert.

2. Strickentwurfssystem (100) nach Anspruch 1, das umfasst:
einen dritten Speicher (33), der Korrekturdaten (7) speichert, die dadurch erhalten werden, dass der Benutzer die Konturlinie der Originaldaten (6) korrigiert, und
eine dritte Erstellungseinheit (23), die das Linienmodul (8) aus einer Konturlinie der Korrekturdaten (7) erstellt.

3. Strickentwurfssystem (100) nach Anspruch 1 oder 2, wobei die Spezifikationseinheit (25) eine Fläche bestimmt, die durch die Konturlinie der Originaldaten (60) und jede aus der Vielzahl von Kandidatenlinien (9) eingeschlossen wird, und als die Annäherungslinie (90) eine aus der Vielzahl von Kandidatenlinien (9), für welche die Fläche minimal ist, spezifiziert.

4. Strickentwurfssystem (100) nach Anspruch 1 oder 2, wobei die Spezifikationseinheit (25) als die Annäherungslinie (90) eine aus der Vielzahl von Kandidatenlinien (9), die der Konturlinie der Originaldaten (60) am nächsten ist, unter Verwendung eines Dynamic-Time-Warping spezifiziert.

## Revendications

1. Système de conception de tricot (100) pour concevoir un tricot à tricoter par une machine à tricoter à plat, sur la base de données de conception contenant des codes de tricotage qui sont des informations sur des mailles constituant le tricot, le système de conception de tricot (100) comportant :
une unité d'entrée (1) pour qu'un utilisateur édite des données de conception ;
une unité d'affichage (4) pour afficher les données de conception sous forme d'une feuille de conception dans laquelle des cellules sont agencées dans une grille dans une direction de rangées et dans une direction de colonne, un code de tricotage étant affecté à chaque cellule ;
une première unité de création (21) qui crée, sur la base de données de motif papier (5) indiquant un contour du tricot, des données originales (6, 60) qui sont des données de conception du tricot comportant une ligne de contour correspondant à une ligne de contour des données du patron en papier (5), la ligne de contour créée étant formée en connectant des lignes droites s'étendant dans la direction des rangées à des lignes droites s'étendant dans la direction des colonnes ; et
une première mémoire (31) qui stocke les données originales (6),
le système de conception de tricot (100) étant **caractérisé par** :
une deuxième mémoire (32) qui stocke un module de lignes (8) comportant des informations concernant une pluralité de lignes minuscules pour constituer une ligne de contour corrigée adaptée au tricotage et un ordre d'agencement des lignes minuscules, dans lequel la ligne minuscule est une ligne parmi une ligne droite s'étendant dans la direction des rangées, une ligne droite s'étendant dans la direction des colonnes, et une combinaison d'une ligne droite s'étendant dans la direction des rangées et d'une ligne droite s'étendant dans la direction des colonnes ;
une deuxième unité de création (22) qui crée, sur la base du module de ligne (8), une pluralité de lignes candidates (9) obtenues en modifiant le nombre de chacune de la pluralité de lignes minuscules ; et
une unité de spécification (25) qui compare une ligne de contour des données originales (60) avec chacune de la pluralité de lignes candidates (9), et qui spécifie une ligne parmi la pluralité de lignes candidates (9) qui est la plus proche de la ligne de contour des données originales (60) comme étant la ligne d'approximation (90).

2. Système de conception de tricot (100) selon la revendication 1, comprenant :
une troisième mémoire (33) qui stocke des données de correction (7) obtenues suite à une correction par un utilisateur de la ligne de contour des données originales (6) ; et
une troisième unité de création (23) qui crée le module de ligne (8) à partir d'une ligne de contour des données de correction (7).

3. Système de conception de tricot (100) selon la revendication 1 ou 2,
dans lequel l'unité de spécification (25) détermine une surface délimitée par la ligne de contour des données originales (60) et chacune de la pluralité de lignes candidates (9), et spécifie, comme étant la ligne d'approximation (90), une parmi la pluralité de lignes candidates (9) pour laquelle la surface est minimale.

4. Système de conception de tricot (100) selon la revendication 1 ou 2,
dans lequel l'unité de spécification (25) spécifie, comme étant la ligne d'approximation (90), l'une de la pluralité de lignes candidates (9) qui est la plus proche de la ligne de contour des données originales (60) en utilisant une déformation temporelle dynamique.
